# EUROPEAN PATENT APPLICATION

(11) **EP 4 838 447 A1**
(43) Date of publication of application: **11.11.2026**
(21) Application number: 25212683.4
(22) Date of filing: 31.10.2025
(51) Int. Cl.: G06Q 30/0242, G06N 3/02, G06Q 30/0251, G06Q 30/0241

(54) **VARIATIONAL QUANTIZATION MODELS FOR EFFICIENT EVALUATION AND CONTENT CREATION**

(30) Priority: 06.05.2025 US 202519200277
(71) Applicant: GOOGLE LLC, Mountain View CA 94043 (US)
(72) Inventor: GONG, Haifeng, Mountain View, 94043 (US); WANG, Dongdong, Mountain View, 94043 (US); LI, Xiaohang, Mountain View, 94043 (US)
(74) Representative: Marks & Clerk GST

(57) **Abstract**

Methods, systems, and apparatus, including computer programs encoded on a computer storage medium, for evaluating and creating digital components. In one aspect, a method includes generating parameters of one or more Gaussian Mixture models using a first set of features related to a digital component request and a second set of features of a customizable digital component. For each asset of a set of assets for the customizable digital component, an asset embedding that encodes features of the asset is obtained. For each layout of a set of layouts for the customizable digital component, a layout embedding that encodes features of the layout is obtained. Asset and layout combinations are identified based on the set of assets and the set of layouts. For each asset and layout combination, a predicted quality metric is computed using the parameters of the Gaussian mixture model(s).

## Description

### TECHNICAL FIELD

This specification relates to data processing and artificial intelligence.

### BACKGROUND

Recent developments in artificial intelligence and, in particular, generative artificial intelligence have caused user-produced visual content such as digital images to become ubiquitous. For example, various types of images can be generated by using a text-to-image models based on text prompts. However, current generative artificial intelligence models often produce inaccurate and/or low-quality images.

### SUMMARY

In a computer networked environment such as the Internet, third-party content providers provide third-party content items for display on end-user computing devices. These third-party content items, for example, digital images and video, can be displayed on client devices in the environment. Digital images and video can be used, for example, on the Internet, for remote meetings via video conferencing, high-definition video entertainment, and/or sharing of user-generated content.

Digital components, such as images and videos, can be created by combining multiple assets (e.g., images, logos, text, controls such as buttons, sound, etc.) into a final creative that can be rendered by a client device. Artificial intelligence (AI) models can be used to evaluate the quality (e.g., predicted performance and/or visual quality) of such digital components based on the individual assets that are combined to create the digital components, and to create the digital components. However, the explosion in possible variations poses significant evaluation challenges, including increased complexity, data sparsity, computational cost, and latency. For example, there may be many layouts and many assets that can be arranged in the layouts, resulting in thousands or millions of possible digital component variations each with a unique combination of layout and one or more assets.

In general, one innovative aspect of the subject matter described in this specification can be embodied in methods that include the actions of generating parameters of one or more Gaussian Mixture models using a first set of features related to a digital component request and a second set of features of a customizable digital component; obtaining, for each asset of a set of assets for the customizable digital component, an asset embedding that encodes features of the asset; obtaining, for each layout of a set of layouts for the customizable digital component, a layout embedding that encodes features of the layout; identifying a plurality of asset and layout combinations based on the set of assets and the set of layouts, wherein each asset and layout combination includes one or more assets of the set of assets and a layout of the set of layouts; computing, for each asset and layout combination, a predicted quality metric using the parameters of the one or more Gaussian mixture models, the asset embedding for each asset of the asset and layout combination and the layout embedding for the layout of the asset and layout combination; selecting a given asset and layout combination using the predicted quality metric for each asset and layout combination; generating a new digital component by populating the layout with the one or more assets of the given asset and layout combination; and sending the new digital component to one or more client devices. Other implementations of this aspect include corresponding apparatus, systems, and computer programs, configured to perform the aspects of the methods, encoded on computer storage devices.

These and other embodiments can each optionally include one or more of the following features. Some aspects include generating an actual quality metric for the given asset and layout combination based on the asset embedding for each asset of the given asset and layout combination, the layout embedding for the layout of the given asset and layout combination, and a request/creative embedding that encodes the first set of features and the second set of features.

In some aspects, the parameters of one or more Gaussian mixture models and the request/creative embedding are generated using a neural network. Some aspects include training the neural network by optimizing a loss function based on (i) selected asset and layout combinations for training samples and (ii) actual quality metrics for the training samples. Some aspects include providing the actual quality metric to a digital component selector configured to select a winning digital component based on respective actual quality metrics of a set of candidate digital components that includes the new digital component. In some aspects, the new digital component is sent to the one or more client devices in response to being selected as the winning digital component.

In some aspects, the one or more Gaussian Mixture models include a plurality of Gaussian Mixture models. Computing the quality metric for each asset and layout combination can include, for each Gaussian mixture model, determining an individual metric using the parameters of the Gaussian mixture model, the asset embedding for each asset of the asset and layout combination and the layout embedding for the layout of the asset and layout combination; applying a respective weight to the individual metric to generate a weighted metric; and determining, as the quality metric for the asset and layout combination, a sum of the weighted metric for each Gaussian mixture model.

In some aspects, selecting the given asset and layout combination using the quality metric for each asset and layout combination includes performing a quantization procedure using an argmax function.

In some aspects, the one or more Gaussian mixture models are generated for each individual digital component request received from client devices.

In some aspects, the set of assets includes image assets and text assets.

Particular embodiments of the subject matter described in this specification can be implemented so as to realize one or more of the following advantages. The techniques described in this document enable AI models to evaluate substantial numbers of combinations (e.g., millions or more) of assets and layouts for digital components with reduced complexity, data sparsity, computational cost, and latency as compared to typical machine learning models, such as sequential factorized models, large language models (LLMs), neural networks, support vector machines, decision trees, etc. For example, rather than performing a full evaluation of every combination of assets and layouts for a customizable digital component, an AI model can be used to generate parameters for one or more Gaussian mixture models (GMMs) that are used to approximate a quality metric for each combination to select the assets and layout for the digital component. This process of generating parameters for GMMs and using the parameters for approximating the quality metric is less complex and faster than performing a full evaluation of each combination of assets and layouts, which enables the digital components to be generated fast enough for on-the-fly creation in response to component requests that require responses in milliseconds. This process is also more computationally efficient (e.g., requiring fewer processor cycles and less memory) than full evaluations using sequential factorized models.

In some implementations, the latency in evaluating and generating digital components is further reduced by using a combined evaluation of assets and layouts rather than using separate AI models to evaluate each separately. The combined evaluation also avoids redundant computations for the assets and layouts, thereby reducing latency and improving resource utilization by not wasting resources to repeat computations. Additionally, the combined evaluation results in higher quality digital components that take into account both layout and asset features together.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which artificial intelligence can be implemented to generate digital components.
FIG. 2 is a block diagram showing the flow of data through a variational quantization model.
FIG. 3 is a flow chart of an example process of evaluating and creating digital components using a variational quantization model.
FIG. 4 is a block diagram of an example computer.

Like reference numbers and designations in the various drawings indicate like elements.

### DETAILED DESCRIPTION

This specification describes techniques for training and using artificial intelligence models to evaluate combinations of assets and layouts for digital components and generate new digital components based on the evaluations. Artificial intelligence (AI) is a segment of computer science that focuses on the creation of models that can perform tasks and actions autonomously, e.g., with little to no human intervention. AI systems can utilize, for example, one or more of machine learning, natural language processing, or computer vision. Machine learning, and its subsets, such as deep learning, focus on developing models that can infer outputs from data. The outputs can include, for example, predictions and/or classifications. Natural language processing focuses on analyzing and generating human language. Computer vision focuses on analyzing and interpreting images and videos. AI systems can include generative models that generate new content, such as images, videos, text, audio, and/or other content, in response to input prompts and/or based on other information.

The techniques described throughout this specification enable AI to more efficiently evaluate substantial amounts of possible variations of assets and optionally enhancements to the assets to create new high quality (e.g., high performance) digital components. A variational quantization model can be trained and used to evaluate many combinations in a more efficient manner than other conventional and AI approaches, e.g., providing reduced complexity, data sparsity, computational cost, and latency. In some implementations, a Gaussian Mixture Model (GMM) is used to approximate or otherwise predict the relationship between (i) assets (e.g., text, images, logos, layouts, etc.) and layouts and (ii) the quality (e.g., predicted performance) of digital components created using the combinations. The GMM can be trained using historical data to efficiently evaluate new combinations by assigning each combination to the most relevant GMM component. The selected assets and layouts (e.g., in the form of their embeddings) can then be used (e.g., in combination with a bottleneck layer embedding) by a digital component predictor, which can include a predictor AI model, to predict or approximate the quality of a digital component that would be created using the combination of assets and layout. A digital component generator, which can include a generative AI model, can generate digital components using the asset and layout combinations that are predicted to have high quality, e.g., a quality metric above a threshold or the combinations having the highest quality metrics such as the top X combinations where X is any integer.

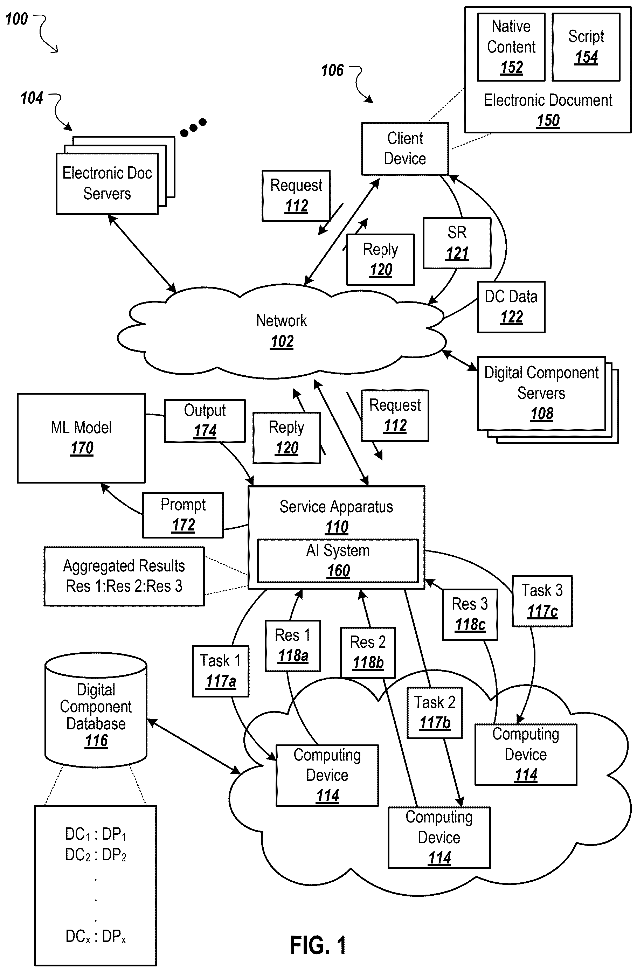

FIG. 1 is a block diagram of an example environment 100 in which AI can be implemented to generate digital components. The example environment 100 includes a network 102, such as a local area network (LAN), a wide area network (WAN), the Internet, or a combination thereof. The network 102 connects electronic document servers 104, client devices 106, digital component servers 108, and a service apparatus 110. The example environment 100 may include many different electronic document servers 104, client devices 106, and digital component servers 108.

The service apparatus 110, which can be implemented as one or more computers in one or more locations, is configured to provide various services to client devices 106, publishers of electronic documents 150, and/or digital component providers that provide digital components to client devices 106, e.g., using the service apparatus 110. In some implementations, the service apparatus 110 can provide search services by providing responses to search queries received from client devices 106. For example, the services apparatus 110 can include a search engine and/or an AI agent or other chat agent that enables users to interact with the agent over the course of conversational queries and responses. The service apparatus 110 can also distribute digital components to client devices 106 for presentation with the responses and/or with electronic documents 150. For example, another search service computer system can send component requests 112 to the service apparatus 110 and these component requests 112 can include one or more queries. In another example, client devices 106 can send component requests 112 to the service apparatus 110, e.g., in response to loading an electronic document 150 that includes a digital component slot for presenting a digital component, as described in more detail below.

As used throughout this document, the phrase "digital component" refers to a discrete unit of digital content or digital information (e.g., a video clip, audio clip, multimedia clip, gaming content, image, text, bullet point, artificial intelligence output, language model output, or another unit of content). A digital component can electronically be stored in a physical memory device as a single file or in a collection of files, and digital components can take the form of video files, audio files, multimedia files, image files, or text files and include advertising information, such that an advertisement is a type of digital component.

The service apparatus 110 is configured to evaluate assets and layouts for customizable digital components and generate new digital components using the assets and layout based on the evaluation. In general, a customizable digital component is a digital component that can be customized by adding one or more assets to a layout. A layout for a customizable digital component can include, for example, visual characteristics (e.g., colors, background designs, etc.) and/or designated areas to be populated with assets. The assets can include, for example, text items (e.g., headline, description, etc.), images, graphics, logos, audio, video clips for video digital components, interactive elements (e.g., buttons, icons, etc.), calls to action (e.g., a click to call button), and/or other types of visual and/or non-visual content. An example layout can include a background design with designated areas for a headline, a description, an image, and a logo. For example, the layout can be in the form of a template. In other examples, the layout may not include designated areas for assets. In these examples, an AI model can be used to arrange the assets within the layout. As described in more detail below, the service apparatus 110 can generate new digital components using assets and layouts in response to component requests 112 such that the generation of the digital components account for features of the component requests.

A client device 106 is an electronic device capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally (i.e., on the client device). Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., a digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service apparatus 110, or a particular service provided by the service apparatus 110. In these situations, the digital component script is executed by the client device 106 when the given electronic document is processed by the client device 106. Execution of the digital component script configures the client device 106 to generate a request for digital components (referred to as a "component request"), which is transmitted over the network 102 to the service apparatus 110. For example, the digital component script can enable the client device 106 to generate a packetized data request including a header and payload data. The component request 112 can include event data specifying features such as a name (or network location) of a server from which the digital component is being requested, a name (or network location) of the requesting device (e.g., the client device 106), and/or information that the service apparatus 110 can use to select one or more digital components, or other content, provided in response to the request. The component request 112 is transmitted, by the client device 106, over the network 102 (e.g., a telecommunications network) to a server of the service apparatus 110.

The component request 112 can include event data specifying other event features, such as the electronic document being requested and characteristics of locations of the electronic document at which the digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service apparatus 110. Similarly, event data specifying keywords associated with the electronic document ("document keywords") or entities (e.g., people, places, or things) that are referenced by the electronic document can also be included in the component request 112 (e.g., as payload data) and provided to the service apparatus 110 to facilitate identification of digital components that are eligible for presentation with the electronic document.

The event data can also include a search query that was submitted from the client device 106 to obtain a search results page or a response in a conversational user interface. For example, an AI agent or other form of a chat agent can provide a conversational user interface in which users can provide natural language queries, which can be in the form of prompts for a language model and receive responses to the queries. The user can refine their expression of their informational needs as the conversation progresses and the AI agent can send component requests 112 with the updated queries. In such examples, the AI agent can include a user session identifier in the component requests so that the service apparatus 110 can correlate queries included in multiple component requests 112 for the same user session with the AI agent and use this information in generating customized digital components.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service apparatus 110 chooses digital components (e.g., third-party content, such as video files, audio files, images, text, gaming content, augmented reality content, and combinations thereof, which can all take the form of advertising content or non-advertising content) that will be presented with the given electronic document (e.g., at a location specified by the script 154) in response to receiving the component request 112 and/or using information included in the component request 112. In some implementations, choosing a digital component includes choosing a customizable digital component that can be customized based on various data, as described in more detail below.

In some implementations, a customizable digital component is selected, its combination of assets and layouts are evaluated, and a new digital component is created in less than a second to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided. The described techniques are adapted to generate a new digital component in a short amount of time such that these errors and user experience impact are reduced or eliminated.

In some implementations, the service apparatus 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC₁₋ₓ). The set of digital components can include customizable digital components. The millions of available digital components can be indexed, for example, in a digital component database 116. Each digital component index entry can reference the corresponding digital component and/or include distribution parameters (DP₁-DPₓ) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords that must be matched (e.g., by electronic documents, document keywords, and/or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service apparatus 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service apparatus 110 aggregates the results 118a-118c received from the set of multiple computing devices 114 and uses information associated with the aggregated results to select one or more digital components that will be provided in response to the request 112. For example, the service apparatus 110 can select a set of winning digital components (one or more digital components) based on the outcome of one or more content evaluation processes, as discussed below. In turn, the service apparatus 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106. If a customizable digital component is a winning digital component, the service apparatus 110 can generate a new digital component using the selected assets and layout for the customizable digital component prior to sending the new digital component to the client device 106. In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., beside, the native content 152 of the electronic document 150. In some implementations, the digital component is overlayed over (or adjacent to) a portion of the native content 152 of the electronic document 150, and the service apparatus 110 can specify the presentation location within the electronic document 150 in the reply 120. For example, when the native content 152 includes video content, the service apparatus 110 can specify a location or object within the scene depicted in the video content over which the digital component is to be presented.

The service apparatus 110 can also include an AI system 160 configured to autonomously evaluate combinations of assets and layouts for customizable digital components and to generate new digital components using the assets and layouts, either prior to a component request 112 (e.g., offline) and/or in response to a request 112 (e.g., online or real-time). For example, the AI system 160 can generate digital components in an offline or online process using assets and layouts received from digital component providers. In the online process, features of a component request 112 (e.g., event data) can be used to customize the digital component for the request 112, e.g., such that the assets and layout used are more relevant to the request 112.

The AI system 160 can use one or more AI models, e.g., one or more machine learning models 170, to evaluate combinations of layouts and assets for customizable digital components, to select an asset and layout combination, and/or to generate new digital components using the selected asset(s) and layout. An asset and layout combination can include a layout and one or more assets.

In some implementations, some or all assets can include enhancements and/or some or all layouts can include options. For example, an enhancement to an image asset may be a higher or lower resolution, text removal (e.g., burned-in text removal), cropping, background blurring, and/or other adjustments to visual characteristics of the image. An enhancement to text can include, for example, a color change, font size selection, bolded font, text shortening, plain English (or other language) rewriting, translated text (e.g., that is translated to a spoken language of the user), and/or other adjustments to text. Options for a layout can include whether to include a call-to-action button, whether to include a logo, how many asset slots or areas to be populated are included in the layout, the types of assets to include, and/or other adjustable aspects of a layout.

One or more of the machine learning models 170 trained and/or used by the AI system 160 can include language models, e.g., large language models. A large language model ("LLM") is a model that is trained to generate and understand human language. LLMs are trained on massive datasets of text and code, and they can be used for a variety of tasks. For example, LLMs can be trained to translate text from one language to another; summarize text, such as web site content, search results, news articles, or research papers; answer questions about text, such as "What is the capital of Montana?"; create chatbots that can have conversations with humans; and generate creative text, such as poems, stories, and code.

The language model(s) can be any appropriate language model neural network that receives an input sequence made up of text tokens selected from a vocabulary and auto-regressively generates an output sequence made up of text tokens from the vocabulary. For example, the language model can be a Transformer-based language model neural network or a recurrent neural network-based language model.

In some situations, a language model can be referred to as an auto-regressive neural network when the neural network used to implement the language model auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the neural network of the language model can process the current input sequence to generate a score distribution, e.g., a probability distribution, that assigns a respective score, e.g., a respective probability, to each token in the vocabulary of tokens. The neural network of the language model can then select, as the particular token, a token from the vocabulary using the score distribution. For example, the neural network of the language model can greedily select the highest-scoring token or can sample, e.g., using nucleus sampling or another sampling technique, a token from the distribution.

As a particular example, the language model can be an auto-regressive Transformer-based neural network that includes (i) a plurality of attention blocks that each apply a self-attention operation and (ii) an output subnetwork that processes an output of the last attention block to generate the score distribution.

A language model can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A. Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are few-shot learners. arXiv preprint arXiv:2005.14165, 2020.

Generally, however, the Transformer-based neural network includes a sequence of attention blocks, and, during the processing of a given input sequence, each attention block in the sequence receives a respective input hidden state for each input token in the given input sequence. The attention block then updates each of the hidden states at least in part by applying self-attention to generate a respective output hidden state for each of the input tokens. The input hidden states for the first attention block are embeddings of the input tokens in the input sequence and the input hidden states for each subsequent attention block are the output hidden states generated by the preceding attention block.

In this example, the output subnetwork processes the output hidden state generated by the last attention block in the sequence for the last input token in the input sequence to generate the score distribution.

Generally, because the language model is auto-regressive, the service apparatus 110 can use the same language model to generate multiple different candidate output sequences in response to the same request, e.g., by using beam search decoding from score distributions generated by the language model, using a Sample-and-Rank decoding strategy, by using different random seeds for the pseudo-random number generator that's used in sampling for different runs through the language model or using another decoding strategy that leverages the auto-regressive nature of the language model.

In some implementations, the language model is pre-trained, e.g., trained on a language modeling task that does not require providing evidence in response to user questions, and the service apparatus 110 (e.g., using AI system 160) causes the language model to generate output sequences according to the pre-determined syntax through natural language prompts in the input sequence.

For example, the service apparatus 110 (e.g., AI system 160), or a separate training system, pre-trains a language model (e.g., the neural network) on a language modeling task, e.g., a task that requires predicting, given a current sequence of text tokens, the next token that follows the current sequence in the training data. As a particular example, the language model can be pre-trained on a maximum-likelihood objective on a large dataset of text, e.g., text that is publicly available from the Internet or another text corpus.

Each digital component provider can provide, for each of its customizable digital components, data about the customizable digital component e.g., distribution parameters, URL of a landing page linked to by the customizable digital component, information about a product or service that is the subject of the customizable digital component, and/or other relevant information about the customizable digital component. Each digital component provider can also provide, for each of its customizable digital components, a set of assets and a set of layouts that can be used to generate new versions of the customizable digital component. The digital components generated using the assets and layouts can also be referred to as customized digital components. The digital component providers can provide the data, assets, and layouts to the service apparatus 110. Each customizable digital component can be stored by the service apparatus 110 with its data, assets, and layouts.

The AI system 160 is configured to train and use one or more AI models, e.g., machine learning models 170, to evaluate combinations of layouts and assets for customizable digital components, to select an asset and layout combination, and/or to generate news digital components using the selected asset(s) and layout. As the assets can include enhancements and the layouts can include options, the set of assets and set of layouts for a customizable digital component can result in a substantial number of potential combinations. For example, the number of variations for a set of customizable digital components of a digital component provider can be C customizable digital components × M assets × N enhancements × L layouts × P options. In a typical digital component selection process, the set of candidate digital components can include thousands or millions of customizable digital components. Evaluating this many combinations for this many customizable digital components using complex AI models require too much time and computational resources to practically evaluate the combinations with accuracy and to generate new digital components in an online process, e.g., in less than 500 milliseconds, 200 milliseconds, or another short duration.

For example, one approach to evaluating assets and layouts for customizable digital components is using a sequential factorized model. In this approach, an asset machine learning ("ML") model is used to evaluate and select asset(s) for a customized digital component based on features of the assets for the customizable digital component, features of the customizable digital component, and features of a component request. Another layout model is used to evaluate and select a layout for a customized digital component based on features of the layouts for the customizable digital component, features of the customizable digital component, and features of a digital component request. The selected asset(s), selected layout, and features of the customizable digital component are then evaluated by a main ML model to generate a quality metric for the combination of the selected asset(s) and the selected layout for the digital component request. This quality metric can represent a prediction of the likelihood that a user for which the component request was sent will interact with (e.g., select or click on) a new digital component created using the selected combination, perform a specified action after viewing or interacting with the new digital component, or actively view the new digital component if it is presented to the user.

This sequential factorized model approach has several limitations as compared to the variational quantization model approach described in detail below. A cold start and misleading labels result in the main model's initial inaccurate (e.g., random) predictions misleading the asset and layout model's training. The separate predictions of asset and layout quality metrics for use in selecting the assets and layouts leads to redundant computations, e.g., for features related to the component request and/or features of the customizable digital component. The sequential execution of the models increases the latency in selecting and sending digital components to client devices 106 in response to component requests. Different update schedules for the models can cause inconsistencies between models and instability. Applying complex asset/layout models to all candidates (including unselected ones) is computationally wasteful. For example, using a sequential factorized model can require that the complex full analysis is performed on all combinations of assets and layouts to find the best combination.

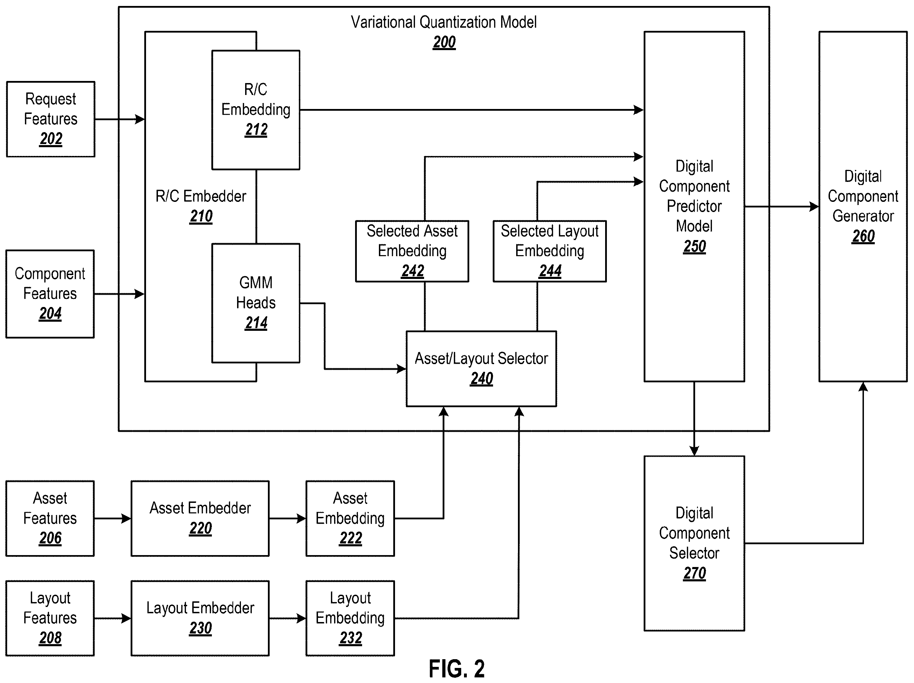

FIG. 2 is a block diagram showing the flow of data through a variational quantization model 200. The variational quantization model 200 can be included as one of the ML models 170 of FIG. 1. In general, the variational quantization model 200 is configured to predict quality metrics for asset and layout combinations to select assets and a layout for a new digital component and to determine an actual quality metric for the selected asset and layout combination.

The variational quantization model 200 includes a component request/customizable digital component (R/C) embedder 210, an asset/layout selector 240, and a digital component predictor model 250. The R/C embedder 210 can be implemented as an AI model, e.g., as a neural network, LLM, multilayer perceptron (MLP), deep and cross network, transformer model, or other appropriate type of AI model. The R/C embedder 210 receives, as input data, request features 202 that include features of a component request and digital component features 204 that include features of a customizable digital component. The request features 202 can include, for example, any of the event data described above or any other information included in a component request or related to a component request. The component features 204 can include the data about the customizable digital component, e.g., distribution parameters, URL of a landing page linked to by the customizable digital component, the content of the landing page, content of other pages or resources related to the customizable digital component, information about a product or service that is the subject of the customizable digital component, and/or other relevant information about the customizable digital component.

The R/C embedder 210 is configured to generate an R/C embedding 212 that represents the request features 202 and the component features 204, e.g., in a reduced dimensionality as compared to individual embeddings of the request features 202 and the component features 204. In some implementations, one or more layers of a neural network of the R/C embedder 210 are configured to generate the R/C embedding. For example, the one or more layers can find an embedding space in which a predicted quality metric can be easily generated using a GMM. In a particular example, the one or more layers that generate the R/C embedding 212 can be a bottleneck layer of the neural network. The R/C embedding 212 can also be generated a neural network or other AI model such as Contrastive Language-Image Pre-Training (CLIP) neural network, using an autoencoder such as a Vector Quantised-Variational AutoEncoder (VQ-VAE), or using a text embedder that is configured to convert text arrays to floating point numbers.

The R/C embedder 210 is also configured to generate one or more GMMs based on the request features 202 and the component features 204 and output the parameters of the GMM(s) using GMM heads 214. The GMM heads 214 include one or more output producing layers of the neural network. As described in more detail below, the R/C embedder 210 can be trained to generate the parameters for the GMMs using historical data. The parameters of a GMM can include a mean (*µ*) that represents a center of the mixture, covariance (σ) that describes the shape and orientation of the GMM component, and weights (w) which may also be referred to as mixing probabilities that represent the proportion of data belonging to each GMM component.

In some implementations, the R/C embedder 210 generates the parameters of the GMM(s) in the bottleneck layer of a neural network. Generating GMM parameters instead of a regular vector makes the model a variational model. The GMM(s) are learned to approximate a relationship between assets/layouts and quality. For example, each GMM can represent a predicted quality metric or predicted quality metric range. In this example, each asset and layout combination can be assigned to one or more GMMs with some probability based on the features of the asset(s) and layout of the asset and layout combination.

The R/C embedder 210 can be configured to generate new GMMs for each component request for which customizable digital components are being considered as candidates for selection. This enables the R/C embedder 210 to tailor the predicted quality metrics to the features of the component request.

The R/C embedder 210 can generate the parameters of the GMM(s) using an Expectation-Maximization (EM) algorithm. For example, the R/C embedder 210 can randomly initialize the GMM parameters for K Gaussian component (also referred to as mixtures). In the expectation step, the R/C embedder 210 can then calculate the responsibility of each Gaussian component for each data point, where the responsibility indicates the probability of the data point belonging to that component. In the maximization step, the R/C embedder 210 can then update the GMM parameters based on the responsibilities. The R/C embedder 210 can repeat the expectation and maximization steps until convergence occurs. In this example, the GMM parameters are predicted based on the request features 202 and the component features 204.

The asset/layout selector 240 receives the parameters of the GMM(s) from the GMM heads 214 and uses the parameters to compute predicted quality metrics for asset and layout combinations. The predicted quality metric for an asset and layout combination can represent a predicted performance of a digital component created using the combination of asset(s) and layout represented by the asset and layout combination. For example, the predicted quality metric for an asset and layout combination can represent a predicted likelihood that a user will interact with (e.g., select or click on) the digital component, perform a specified action after viewing or interacting with the digital component, or actively view the digital component. For example, the predicted quality metric can be a predicted click-through rate, predicted conversion rate, or predicted active view rate. In some implementations, the predicted quality metric can represent the aesthetic quality of the digital component.

The predicted quality metric for an asset and layout combination can be based on an asset embedding 222 that represents asset features 206 of one or more assets and a layout embedding 232 that represents layout features 208 of a layout. The asset/layout selector 240 can receive the asset embedding 222 and the layout embedding 232 from an asset embedder 220 and a layout embedder 230, respectively, or obtain the embeddings 222 and 232 from a data storage device if pre-generated.

The asset embedder 220 can generate the asset embedding 222 for one or more assets using the asset features 206 for the one or more assets. The asset features 206 for an asset can include a name of the asset, a type of the asset (e.g., text, image, etc.), visual characteristics of the asset (e.g., color(s), object(s) depicted by an image, design type, font characteristics, etc.), language, meta data, (e.g., length, dimensions, image file size, etc.), and/or other appropriate features related to the asset(s). The layout features 208 for a layout can include a name of the layout, a type of the layout, the number of populatable areas and the type of asset that can be placed in each area, the location of the populatable areas, visual characteristics of the layout (e.g., color(s), objects depicted in the layout, etc.), language of content to be arranged in layout, meta data (length, dimensions, etc.), and/or other appropriate features related to the layout. The asset embedder 220 and/or the layout embedded can be implemented as an AI model, e.g., as a neural network.

In some implementations, the asset embeddings 222 and the layout embeddings 232 are generated in an offline process such that the embeddings 222 and 232 do not have to be generated when a component request is received. This reduces the latency in generating the predicted quality metrics and the computational overhead that would be required at request time to generate the embeddings 222 and 232. This also reduces wasted resources that would otherwise be used to regenerate the same embeddings for multiple component requests.

The asset/layout selector 240 can compute the predicted quality metrics based on the parameters of the GMM(s), the asset embedding 222, and the layout embedding 232. The predicted quality metric is referred to as predicted because the GMM(s) are lightweight models compared to the digital component predictor model 250 that determines a more accurate actual quality metric based on the selected asset(s) and selected layout. By generating the predicted quality metrics for each asset and layout combination, the more complex digital component predictor model 250 may only, in some implementations, be used to determine an actual quality metric for selected asset and layout combinations rather than all possible combinations. This significantly reduces the latency and computational burden (e.g., processor cycles and memory used) in evaluating the asset and layout combinations. For example, the quality of thousands of asset and layout combinations can be predicted using GMMs, while only a single selected asset and layout combination may be evaluated by the digital component predictor model 250.

If multiple Gaussian mixtures are generated for a component request, the asset/layout selector 240 can compute the predicted quality metric for an asset and layout combination using Equation 1 below: $q \left(x\right) = {\sum }_{i}^{K} {w}_{i} N \left(x; {μ}_{i}; {σ}_{i}\right)$

In Equation 1, *q*(*x*) is the predicted quality metric, there are K Gaussian mixtures (where *K* is an integer), *wᵢ* is the weight (or mixing probability) of the *i*^{th} mixture, *N* represents a normal or Gaussian distribution, x is a vector (e.g., concatenated vector) of the asset embedding 222 and the layout embedding 232, and *µᵢ* and , *σᵢ* are the parameters of the *i*^{th} Gaussian mixture that are learned during a training process described below. Thus, in Equation 1, the predicted quality metric is based on an individual predicted quality metric (individual metric) computed for each Gaussian mixture using the embeddings 222 and 232 and the weight for the Gaussian mixture. In this example, the predicted quality metric is the sum of the individual metrics.

In operation, the asset/layout selector 240 can use Equation 1 to assign the asset and layout combinations to the mixtures with some probability and to determine the predicted quality metric q(x) based on the assignment probabilities. For example, each mixture can be a distribution of the asset and layout combinations. The closer to the center of mixture an asset and layout combination is, the higher the predicted quality of the asset and layout combination is for that mixture. The asset/layout selector 240 can use Equation 1 to generate the mixtures and, for each asset and layout combination, determine a weighted sum of the predicted quality scores across all of the mixtures using the weights *wᵢ*.

The asset/layout selector 240 can select an asset and layout combination based on the predicted quality metrics of the asset and layout combinations. For example, the asset/layout selector 240 can select the asset and layout combination that has the highest predicted quality metric. In another example, the asset/layout selector 240 can select multiple asset and layout combinations, e.g., a particular number of the combinations having the highest predicted quality metrics or each combination that has a predicted quality metric that satisfies a threshold, e.g., by meeting or exceeding the threshold.

In some implementations, the asset/layout selector 240 can use an argmax function to find the combination having the highest quality metric. For example, the asset/layout selector 240 can use Equation 2 below to identify the combination having the highest quality metric: $x * = arg {max}_{j} q \left({x}_{j}\right)$

In Equation 2, *xⱼ* is the vector (e.g., a concatenated vector) of the asset embedding 222 and the layout embedding 232 for the *j*^{th} combination, *x** is the vector of the asset embedding 222 and the layout embedding having the highest quality metric, and *q*(*xⱼ*) is the predicted quality metric for the *j*^{th} combination. The quality metric approximation and maximization computation can be considered the quantization operations of the variational quantization model 200.

In some implementations, each asset embedding 242 represents a single asset. In such cases, the asset/layout selector 240 can select, for each type of asset, the asset having the highest predicted quality metric. For example, the quality metric can be predicted for all asset and layout combinations. The asset/layout selector 240 can then identify, for each type of asset, the asset and layout combination that has the highest predicted quality metric. If layouts include multiple types of assets, the asset/layout selector 240 can select a layout based on the predicted quality metrics for asset and layout combinations that include they layout. For example, the asset/layout selector 240 can evaluate the predicted quality metrics for each asset and layout combination that includes the layout. In a particular example, the asset/layout selector 240 can determine an aggregate metric for each layout based on the highest predicted quality metric for each type of asset that the layout includes and select the layout having the highest aggregate metric. In this example, the aggregate metric can be a sum or average (or other measure of central tendency) of the highest predicted quality metrics for the layout. The asset/layout selector 240 can select the assets for the layout based on the individual predicted quality metrics for the asset and layout combinations that include the selected asset. For example, the asset/layout selector 240 can select, for each type of asset of the layout, the asset of that type for which the asset and layout combination that includes the asset and the selected layout have the highest predicted quality metric.

The asset/layout selector 240 can send the selected asset embedding 242 and the selected layout embedding 244 to the digital component predictor model 250. The selected asset embedding 242 can be the asset embedding 222 for the asset(s) of the selected asset and layout combination. If multiple assets are evaluated and selected separately, the asset/layout selector 240 can send the asset embedding 242 for each asset to the digital component predictor model 250. Similarly, the selected layout embedding 244 can be the layout embedding 232 for the layout of the selected asset and layout combination.

The digital component predictor model 250 can be an AI model, e.g., a neural network, that is trained to generate an actual quality metric for the selected asset and layout combination based on request features 202 as represented by the R/C embedding 212, component features 204 as represented by the R/C embedding 212, the selected asset(s) as represented by the selected asset embedding 242, and the selected layout as represented by the selected layout embedding 244. For example, the digital component predictor model 250 can be trained to output an actual quality metric that predicts the performance of a customized digital component generated by populating the selected layout with the selected asset(s) if the customized digital component is provided for presentation to a user in response to the component request represented by the R/C embedding 212. In other words, the actual quality metric can represent a likelihood that the user for which the component request was sent will interact with the customized digital component, perform a specified action after viewing or interacting with the customized digital component, or actively view the customized digital component if the customized digital component is presented to the user in the context defined by the request features 202. Thus, although called an actual quality metric, the metric is a prediction of the likelihood that the user will be interested in the customized digital component.

The digital component prediction model 250 can output the actual quality metric to a digital component generator 260 and/or to a digital component selector 270. The digital component generator 260 is configured to generate a customized digital component by populating the selected layout with the selected asset(s). If the layout is a template, the digital component generator 260 can populate the areas of the template with the appropriate type of asset from the selected assets.

In some implementations, the digital component generator 260 includes an AI model that generates customized digital components using selected assets and layouts. For example, the model can be a neural network, LLM, or image diffusion model. The model can be configured to receive multi-modal input, e.g., a text prompt that instructs the model on how to arrange the assets in the layout, the asset(s) (or their embeddings) and the layout (or its embedding), and generate an image or video based on the input. For example, the digital component generator 260 can include predefined prompts (e.g., one for each layout or one for each group or all layouts) or be configured to generate a prompt based on the selected assets.

The digital component selector 270 can be configured to select a digital component to provide in response to the component request from a set of candidate digital components. For example, there may be many (e.g., thousands or more) candidate digital components that are eligible to be provided in response to the component request based on their distribution parameters. The candidate digital components can include multiple customizable digital components and/or non-customizable digital components that are not customized for each component request. The variational quantization model 200 can be used to determine an actual quality metric for each of the customized digital components separately, e.g., with individual GMMs being generated for each customized digital component.

The digital component predictor model 250 can also be used to generate actual quality metrics for the non-customized digital components using the R/C embedding 212 and an embedding that represents the features of the non-customized digital component.

The actual quality metrics can then be used to select the winning digital component(s) sent to the client device in response to the component request. For example, the digital component selector 270 can determine an overall score for each candidate digital component based on an actual quality metric for the candidate digital component and a selection value for the candidate digital component, e.g., a product of the two values. The selection value can represent an amount (e.g., monetary amount) that the digital component provider is willing to provide to a publisher to have the digital component presented with a resource (e.g., electronic document) of the publisher.

The digital component selector 270 can select one or more candidate digital components based on their overall scores. For example, the digital component selector 270 can select a specified number of candidate digital components having the highest overall scores.

The variational quantization model 200 can be trained by optimizing a loss function using training samples. The training samples can include labeled training data for assets and embeddings. For example, each training sample can include asset embeddings for a set of assets, layout embeddings for a set of layouts, request features for a component request, component features for a customizable digital component, and labels that indicate the quality metric for each combination of assets and layouts in the set of assets and the set of layouts and optionally the asset(s) and layout that should be selected for that training sample. The training can include optimizing the loss function based on the differences between the predicted quality metrics computed by the asset/layout selector 240 and the actual quality metrics of the labels, the differences between the actual quality metrics computed by the digital component predictor model 250 and the actual quality metrics of the labels, and/or whether the correct asset embeddings and layout embeddings are selected.

As compared to a sequential factorized model, the variational quantization model 200 is significantly more efficient due to the GMM approximation of the quality metric, has lower latency due to the more efficient evaluation of the asset and layout combinations using GMM approximation, is more adaptable and flexible due to the GMM adjusting to new data, and can achieve similar performance with less complex models. Thus, the described variational quantization model 200 provides improved computational efficiency, reduced latency, and increased flexibility without sacrificing accuracy or performance.

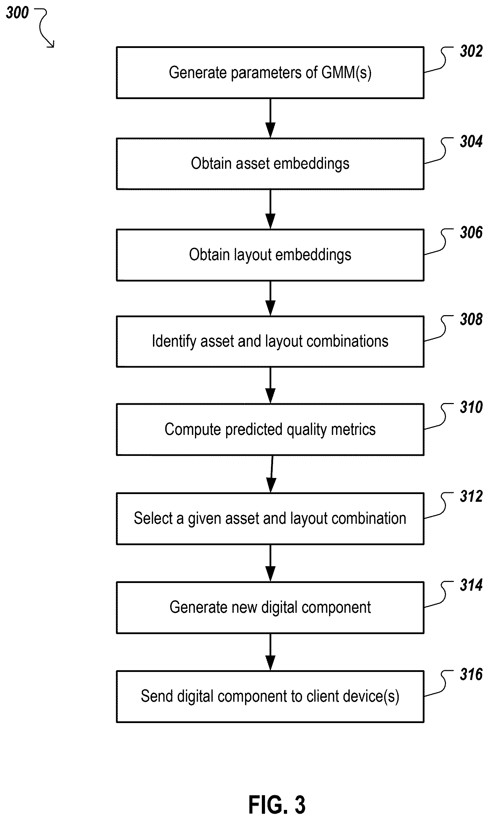

FIG. 3 is a flow chart of an example process 300 of evaluating and creating digital components using a variational quantization model. Operations of the process 300 can be performed, for example, by the service apparatus 110 of FIG. 1 (e.g., by the AI system 160), or another data processing apparatus. The operations of the process 300 can also be implemented as instructions stored on a computer readable medium, which can be non-transitory. Execution of the instructions, by one or more data processing apparatus, causes the one or more data processing apparatus to perform operations of the process 300. For brevity, the process 300 is described in terms of being performed by a system.

The system generates parameters of one or more GMMs (302). As described above, a GMM can be generated based on request features of a component request and component features of a customizable digital component. The parameters of a GMM can include a mean (*µ*), covariance (*σ*), and weights (w). The system can generate the parameters of the GMM(s) in response to receiving a component request, e.g., from a client device of a user.

The system obtains asset embeddings (304). The asset embeddings represent features of assets in a set of assets for the customizable digital component. The asset embeddings can be pre-generated, e.g., using a neural network or other AI model.

The system obtains layout embeddings (306). The layout embeddings represent features of layouts in a set of layouts for the customizable digital component. The layout embeddings can be pre-generated, e.g., using a neural network or other AI model.

The system identifies asset and layout combinations (308). For example, the system can identify all possible combinations of assets and layouts based on the set of assets and the set of layouts.

The system computes predicted quality metrics (310). The system can compute a predicted quality metric for each asset and layout combination. The system can compute the predicted quality metric for an asset and layout combination using the GMM parameters for each GMM generated, an asset embedding for the (or each) asset of the asset and layout combination, and a layout embedding for the layout of the asset and layout combination. For example, the system can compute the predicted quality metrics using Equation 1 above.

The system selects a given asset and layout combination (312). The system can select the given asset and layout combination based on the predicted quality metrics. For example, the system can select, as the given asset and layout combination, the asset and layout combination that has the highest predicted quality metric.

The system generates a new or customized digital component (314). The system can generate the digital component using the selected asset(s) and the selection layout. For example, the system can populate the selected layout with the selected asset(s), e.g., by populating areas of a template or using an AP model.

The system sends the digital component to one or more client devices (316). For example, the system can send the digital component to the client device from which the component request was received.

In some implementations, the digital component is placed in a digital component selection process that selects from multiple candidate digital components. In such implementations, the digital component may only be provided to the client device if the digital component is selected over the other candidate digital components.

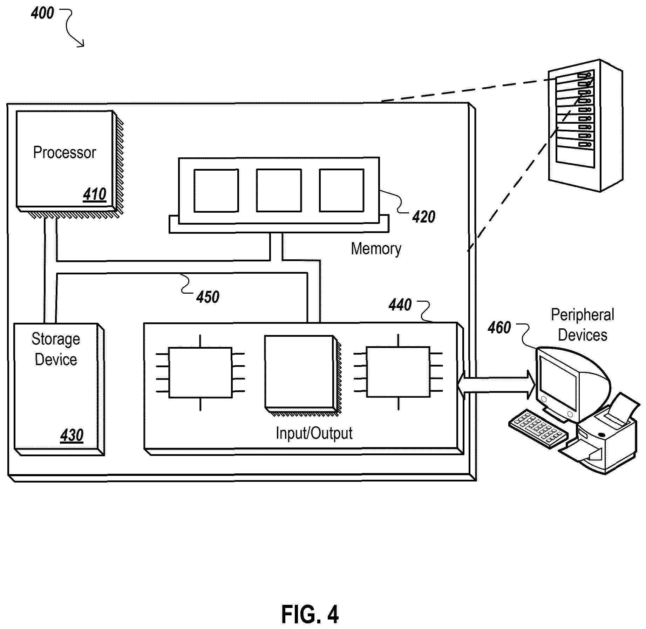

FIG. 4 is a block diagram of an example computer system 400 that can be used to perform operations described above. The system 400 includes a processor 410, a memory 420, a storage device 430, and an input/output device 440. Each of the components 410, 420, 430, and 440 can be interconnected, for example, using a system bus 450. The processor 410 is capable of processing instructions for execution within the system 400. In one implementation, the processor 410 is a single-threaded processor. In another implementation, the processor 410 is a multi-threaded processor. The processor 410 is capable of processing instructions stored in the memory 420 or on the storage device 430.

The memory 420 stores information within the system 400. In one implementation, the memory 420 is a computer-readable medium. In one implementation, the memory 420 is a volatile memory unit. In another implementation, the memory 420 is a non-volatile memory unit.

The storage device 430 is capable of providing mass storage for the system 400. In one implementation, the storage device 430 is a computer-readable medium. In various different implementations, the storage device 430 can include, for example, a hard disk device, an optical disk device, a storage device that is shared over a network by multiple computing devices (e.g., a cloud storage device), or some other large capacity storage device.

The input/output device 440 provides input/output operations for the system 700. In one implementation, the input/output device 440 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 460. Other implementations, however, can also be used, such as mobile computing devices, mobile communication devices, set-top box television client devices, etc.

Although an example processing system has been described in FIG. 4, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

This document refers to a service apparatus. As used herein, a service apparatus is one or more data processing apparatus that perform operations to facilitate the distribution of content over a network. The service apparatus is depicted as a single block in block diagrams. However, while the service apparatus could be a single device or single set of devices, this disclosure contemplates that the service apparatus could also be a group of devices, or even multiple different systems that communicate in order to provide various content to client devices. For example, the service apparatus could encompass one or more of a search system, a video streaming service, an audio streaming service, an email service, a navigation service, an advertising service, a gaming service, or any other service.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

In addition to the embodiments described above, the following embodiments are also innovative:
Embodiment 1 is a method comprising:
   generating parameters of one or more Gaussian Mixture models using a first set of features related to a digital component request and a second set of features of a customizable digital component;
   obtaining, for each asset of a set of assets for the customizable digital component, an asset embedding that encodes features of the asset;
   obtaining, for each layout of a set of layouts for the customizable digital component, a layout embedding that encodes features of the layout;
   identifying a plurality of asset and layout combinations based on the set of assets and the set of layouts, wherein each asset and layout combination comprises one or more assets of the set of assets and a layout of the set of layouts;
   computing, for each asset and layout combination, a predicted quality metric using the parameters of the one or more Gaussian mixture models, the asset embedding for each asset of the asset and layout combination and the layout embedding for the layout of the asset and layout combination;
   selecting a given asset and layout combination using the predicted quality metric for each asset and layout combination;
   generating a new digital component by populating the layout with the one or more assets of the given asset and layout combination; and
   sending the new digital component to one or more client devices.
Embodiment 2 is the method of embodiment 1, comprising generating an actual quality metric for the given asset and layout combination based on the asset embedding for each asset of the given asset and layout combination, the layout embedding for the layout of the given asset and layout combination, and a request/creative embedding that encodes the first set of features and the second set of features.
Embodiment 3 is the method of embodiment 2, wherein the parameters of one or more Gaussian mixture models and the request/creative embedding are generated using a neural network.
Embodiment 4 is the method of embodiment 3, comprising training the neural network by optimizing a loss function based on (i) selected asset and layout combinations for training samples and (ii) actual quality metrics for the training samples.
Embodiment 5 is the method of any one of embodiments 2 to 4, comprising providing the actual quality metric to a digital component selector configured to select a winning digital component based on respective actual quality metrics of a set of candidate digital components that includes the new digital component.
Embodiment 6 is the method of embodiment 5, wherein the new digital component is sent to the one or more client devices in response to being selected as the winning digital component.
Embodiment 7 is the method of any one of embodiments 1 to 6, wherein the one or more Gaussian Mixture models comprise a plurality of Gaussian Mixture models.
Embodiment 8 is the method of embodiment 7, wherein computing the quality metric for each asset and layout combination comprises:
   for each Gaussian mixture model,
      determining an individual metric using the parameters of the Gaussian mixture model, the asset embedding for each asset of the asset and layout combination and the layout embedding for the layout of the asset and layout combination;
      applying a respective weight to the individual metric to generate a weighted metric; and
   determining, as the quality metric for the asset and layout combination, a sum of the weighted metric for each Gaussian mixture model.
Embodiment 9 is the method of any one of embodiments 1 to 8, wherein selecting the given asset and layout combination using the quality metric for each asset and layout combination comprises performing a quantization procedure using an argmax function.
Embodiment 10 is the method of any one of embodiments 1 to 9, wherein the one or more Gaussian mixture models are generated for each individual digital component request received from client devices.
Embodiment 11 is the method of any one of embodiments 1 to 10, wherein the set of assets comprises image assets and text assets.

## Claims

1. A method comprising:
generating parameters of one or more Gaussian Mixture models using a first set of features related to a digital component request and a second set of features of a customizable digital component;
obtaining, for each asset of a set of assets for the customizable digital component, an asset embedding that encodes features of the asset;
obtaining, for each layout of a set of layouts for the customizable digital component, a layout embedding that encodes features of the layout;
identifying a plurality of asset and layout combinations based on the set of assets and the set of layouts, wherein each asset and layout combination comprises one or more assets of the set of assets and a layout of the set of layouts;
computing, for each asset and layout combination, a predicted quality metric using the parameters of the one or more Gaussian mixture models, the asset embedding for each asset of the asset and layout combination and the layout embedding for the layout of the asset and layout combination;
selecting a given asset and layout combination using the predicted quality metric for each asset and layout combination;
generating a new digital component by populating the layout with the one or more assets of the given asset and layout combination; and
sending the new digital component to one or more client devices.

2. The method of claim 1, comprising generating an actual quality metric for the given asset and layout combination based on the asset embedding for each asset of the given asset and layout combination, the layout embedding for the layout of the given asset and layout combination, and a request/creative embedding that encodes the first set of features and the second set of features.

3. The method of claim 2, wherein the parameters of one or more Gaussian mixture models and the request/creative embedding are generated using a neural network.

4. The method of claim 3, comprising training the neural network by optimizing a loss function based on (i) selected asset and layout combinations for training samples and (ii) actual quality metrics for the training samples.

5. The method of any one of claims 2 to 4, comprising providing the actual quality metric to a digital component selector configured to select a winning digital component based on respective actual quality metrics of a set of candidate digital components that includes the new digital component.

6. The method of claim 5, wherein the new digital component is sent to the one or more client devices in response to being selected as the winning digital component.

7. The method of any preceding claim, wherein the one or more Gaussian Mixture models comprise a plurality of Gaussian Mixture models.

8. The method of claim 7, wherein computing the quality metric for each asset and layout combination comprises:
for each Gaussian mixture model,
determining an individual metric using the parameters of the Gaussian mixture model, the asset embedding for each asset of the asset and layout combination and the layout embedding for the layout of the asset and layout combination;
applying a respective weight to the individual metric to generate a weighted metric; and
determining, as the quality metric for the asset and layout combination, a sum of the weighted metric for each Gaussian mixture model.

9. The method of any preceding claim, wherein selecting the given asset and layout combination using the quality metric for each asset and layout combination comprises performing a quantization procedure using an argmax function.

10. The method of any preceding claim, wherein the one or more Gaussian mixture models are generated for each individual digital component request received from client devices.

11. The method of any preceding claim, wherein the set of assets comprises image assets and text assets.

12. A system comprising:
one or more processors; and
one or more storage devices storing instructions that, when executed by the one or more processors, cause the one or more processors to perform operations comprising a method according to any preceding claim

13. A computer readable storage medium carrying instructions that, when executed by one or more processors, cause the one or more processors to perform operations comprising a method according to any preceding claim.
